# EUROPÄISCHE PATENTSCHRIFT

(11) **EP 1 476 678 B1**
(45) Veröffentlichungstag und Bekanntmachung des Hinweises auf die Patenterteilung: **18.06.2008**
(21) Anmeldenummer: 02806852.6
(22) Anmeldetag: 31.10.2002
(51) Int. Cl.: F16H 7/08

(54) **SPANNVORRICHTUNG MIT SPANNDRUCK-REGELVENTIL**
TENSIONER HAVING A TENSIONING PRESSURE CONTROL VALVE
DISPOSITIF DE TENSION A SOUPAPE REGULATRICE DE PRESSION DE TENSION

(30) Priorität: 20.02.2002 DE 20202664 U
(43) Veröffentlichungstag der Anmeldung: 17.11.2004
(73) Patentinhaber: JOH. WINKLHOFER & SÖHNE GmbH & Co KG, D-81369 München (DE)
(72) Erfinder: HELLMICH, Wolfram, 81829 München (DE)
(74) Vertreter: Grünecker, Kinkeldey, Stockmair & Schwanhäusser Anwaltssozietät
(86) Internationale Anmeldenummer: PCT/EP2002/012217
(87) Internationale Veröffentlichungsnummer: WO 2003/071161

(56) Entgegenhaltungen:
- DE-A- 2 008 472
- DE-C- 3 824 555
- GB-A- 2 357 820
- US-A- 5 637 047
- US-A- 5 700 213

## Beschreibung

Die Erfindung betrifft eine Spannvorrichtung für endlose Übertragungselemente, wie Ketten oder Riemen, mit einer Druckkammer, die zur Betätigung eines auf das Übertragungselement einwirkenden Spannmittels mit einem Spanndruck beaufschlagt ist, mit einem Versorgungsanschluss, der mit einem Versorgungsdruck beaufschlagt ist, und mit einem zwischen der Druckkammer und dem Versorgungsanschluss angeordneten Ventil mit einer Schließeinrichtung, die durch den Spanndruck in eine Schließstellung überführbar ist.

Derartige Spannvorrichtungen werden beispielsweise zum Spannen von Ketten, wie von Steuerketten von Verbrennungskraftmotoren eingesetzt. Dabei ist der Versorgungsanschluss der Spannvorrichtung üblicherweise an den Ölkreislauf des Verbrennungskraftmotors angeschlossen. Problematisch ist dabei, dass der Ölkreislauf unter Berücksichtigung anderer Kriterien und nicht für den Betrieb der Spannvorrichtung ausgelegt ist. Dies hat zur Folge, dass bei starken Schwankungen des Versorgungsdruckes über die Betriebsdauer des Motors, insbesondere bei Druckspitzen des Versorgungsdruckes, der Spanndruck unnötig ansteigt. Ein zu hoher Spanndruck führt aber zu erhöhtem Verschleiß und zu erhöhten Reibungskräften bei den endlosen Übertragungselementen.

Zur Vermeidung übermäßig hoher Spanndrücke sind im Stand der Technik Spannvorrichtungen bekannt, bei denen ein Überdruckventil zusätzlich zum Ventil zwischen Versorgungsanschluss und Druckkammer in der Druckkammer vorgesehen ist. Derartige Spannvorrichtungen sind aus der US 6,193,623 B1 und der DE 41 33 560 A1 bekannt.

In einer Weiterentwicklung der mit einem Überdruckventil gesicherten Druckkammer sind Überdruckventile mit einem zwischen dem Versorgungsanschluss und der Druckkammer angeordneten Rückschlagventil in einer komplexen Baueinheit miteinander vereint. Derartige Spannvorrichtungen sind in der EP 0 686 787 B1 und der DE 38 24 555 C1 beschrieben und gezeigt.

Aus der US 5 700 213 ist eine Spannvorrichtung mit der Merkmalen des Oberbegriffes des Anspruches 1 bekannt.

Die im Stande der Technik beschriebenen Lösungen zur Vermeidung eines übermä-βigen Spanndruckes sind allesamt konstruktiv sehr aufwändig, weisen eine hohe Teileanzahl auf und sind daher schwierig zusammenzubauen.
Der Erfindung liegt daher die Aufgabe zugrunde, eine einfach gestaltete Spannvorrichtung zu schaffen, bei der im Betrieb zu hohe Spanndrücke vermieden werden.

Diese Aufgabe wird erfindungsgemäß für eine Spannvorrichtung der eingangs genannten Art dadurch gelöst, dass das Ventil als Spanndruck-Regelventil ausgestaltet ist, indem die Schließeinrichtung ein der Überführung in die Schließstellung entgegenwirkendes, im Wesentlichen federelastisches Vorspannelement aufweist.

Diese Lösung ist gegenüber dem Stand der Technik konstruktiv vereinfacht, da nunmehr das Ventil zwischen Versorgungsanschluss und Druckkammer als Spanndruck-Regelventil den Spanndruck selbsttätig auf einem vorbestimmten Niveau hält. Dieses Niveau wird im Wesentlichen durch eine vom federelastischen Vorspannelement erzeugte Vorspannkraft, die der Wirkung des Spanndruckes entgegengesetzt ist und die Schließeinrichtung in die Offenstellung überführt, bestimmt. Aufgrund der Ausgestaltung als Regelventil kann auf den Einsatz von Überdruckventilen in der Druckkammer weitgehend verzichtet werden. Übermäßige Spanndrücke können bei der erfindungsgemäßen Ausgestaltung der Spannvorrichtung nicht mehr entstehen.

Ein weiterer Vorteil der erfindungsgemäßen Lösung beim Einsatz in Verbrennungsmotoren ist darin zu sehen, dass bei abgeschaltetem Verbrennungsmotor das Ventil durch das Vorspannelement aus der Schließstellung in die Offenstellung überführt wird. Dadurch kann sichergestellt werden, dass die Druckkammer beim Starten des Motors sofort mit einem Druckfluid befüllt werden kann.

Die Schließeinrichtung des Ventils kann gemäß einer vorteilhaften Weiterbildung einen Schließkörper aufweisen, durch den in der Schließstellung eine Verbindungsleitung zwischen dem Versorgungsanschluss und der Druckkammer druckdicht verschlossen ist. Der Schließkörper kann beispielsweise im Wesentlichen kugelförmig ausgestaltet sein und mit einem entsprechenden Ventilsitz in der Schließstellung dichtend zusammenwirken. Auch eine nadelförmige Ausgestaltung des Schließkörpers ist in einer alternativen Ausgestaltung möglich.

Ferner kann das Ventil zwischen dem Versorgungsanschluss und der Druckkammer als ein Rückschlagventil ausgebildet sein.

Gemäß einer besonders vorteilhaften Ausgestaltung der Spannvorrichtung kann die Schließeinrichtung ein Betätigungselement aufweisen, durch das bei Überschreiten eines vorbestimmten Spanndruckes der Schließkörper in die Schließstellung gedrückt ist. Durch dieses baulich vom Schließkörper getrennte zusätzliche Betätigungselement kann eine präzisere Überführung der Schließeinrichtung in die Schließstellung erreicht werden. Hierzu kann sich das Vorspannelement gemäß einer Weiterbildung der Erfindung zwischen einem gehäuseseitigen Abschnitt der Spannvorrichtung einerseits und dem Betätigungsmittel andererseits abstützen.

Um eine schnelle Überführung in die Offenstellung zu erhalten und den konstruktiven Aufbau möglichst einfach zu gestalten, können das Betätigungselement und der Schließkörper in der Spannvorrichtung im Wesentlichen unabhängig voneinander beweglich aufgenommen sein. Bei dieser Ausgestaltung wird der Schließkörper lediglich bei der Überführung in die Schließstellung durch das Betätigungselement in seiner Bewegungsfreiheit eingeschränkt und in die Schließstellung gedrückt. In der Offenstellung ist der Schließkörper frei beweglich, so dass unabhängig vom Betätigungselement bei verschiedenen anderen Zustandsbedingungen die Schließstellung vom Schließkörper eingenommen werden kann.

Zur genauen Regelung des Spanndruckes kann das Betätigungselement eine an die Druckkammer angrenzende Druckaufnahmefläche aufweisen. Auf diese Druckaufnahmefläche wirkt der Spanndruck und erzeugt eine die Schließeinrichtung in die Schließstellung bewegende Schließkraft, die der durch das Vorspannelement erzeugten Vorspannkraft entgegengerichtet ist. Durch das Verhältnis von Vorspannkraft und Schließkraft wird derjenige Spanndruck bestimmt, der die Schließeinrichtung in die Schließstellung überführt.

Um den Schließkörper in die Schließstellung zu bewegen, kann ein Ende des Betätigungselements bis an den Schließkörper heranreichen. Vorzugsweise ist dieses Ende dem mit dem Druckaufnahmefläche versehenen Ende des Betätigungselements entgegengesetzt.

Eine einfache konstruktive Ausgestaltung der Schließeinrichtung ergibt sich, wenn das Betätigungselement als ein im Wesentlichen in Spannrichtung der Spannvorrichtung längsbeweglicher Kolben ausgestaltet ist. Der Kolben kann insbesondere zylinderförmig ausgestaltet sein, so dass er einfach zu fertigen ist.

Um eine möglichst klein bauende Spannvorrichtung zu erhalten, können die Schraubenfeder und das Betätigungsmittel zumindest abschnittsweise sich koaxial überlappend angeordnet sein.

Ferner kann das Betätigungselement in einem Durchlass angeordnet sein, der sich im Wesentlichen parallel zu einer Verbindungsleitung zwischen dem Ventil und der Druckkammer erstreckt.

Die Spannvorrichtung kann wahlweise eine nach außen hin weitgehend abgedichtete Druckkammer aufweisen, oder aber eine Leckageeinrichtung umfassen, durch die der Spanndruck in der Druckkammer während des Betriebs allmählich abgebaut wird. Diese Ausgestaltung ist insbesondere bei der Verwendung in Verbrennungskraftmotoren sinnvoll: Ist der Verbrennungskraftmotor ausgeschaltet und steht am Versorgungsanschluss kein Versorgungsdruck an, so baut sich durch Leckage über die Leckageeinrichtung der Spanndruck allmählich ab. Bei der erfindungsgemäßen Ausgestaltung wird dadurch in Abhängigkeit von der Vorspannkraft des Vorspannelements die Schließeinrichtung in die Offenstellung gedrückt. Wird der Verbrennungskraftmotor gestartet, so ist die Verbindung zwischen dem Verbindungsanschluss und der Druckkammer beim Start geöffnet, die Druckkammer kann schnell befüllt und der Spanndruck schnell aufgebaut werden.

Die Leckageleitung kann dabei von der Druckkammer zur Außenumgebung der Spannvorrichtung führen. Durch einen möglichst hohen Strömungswiderstand in der Leckageleitung, beispielsweise durch einen geringen Strömungsquerschnitt , wird sichergestellt, dass ein lediglich allmählicher Abbau des Spanndruckes in der Druckkammer stattfinden kann.

Im Folgenden werden Aufbau und Funktion der erfindungsgemäßen Spannvorrichtung anhand eines Ausführungsbeispiels mit Bezug auf die beigefügte Zeichnung genauer beschrieben.

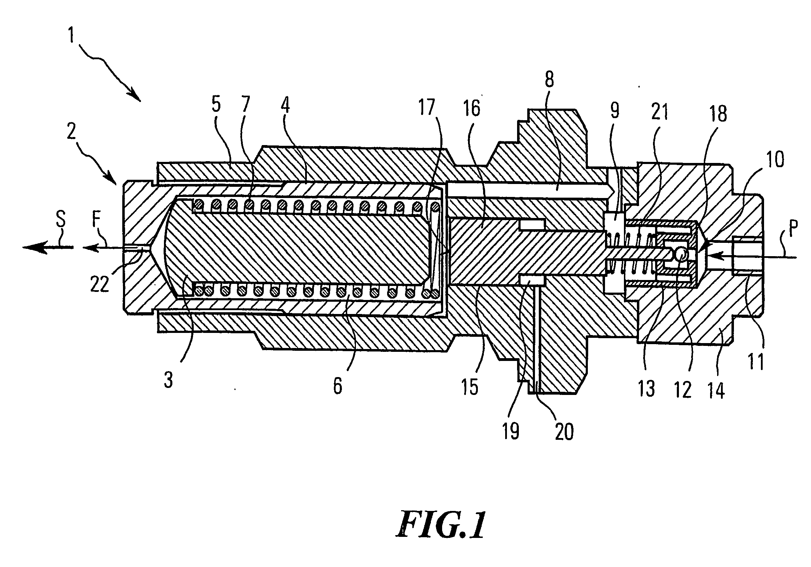

Dabei zeigt
- Fig. 1: ein Rücken einen Längsschnitt durch ein Ausführungsbeispiel einer erfindungsgemäßen Spannvorrichtung.

Fig. 1 zeigt eine Spannvorrichtung 1 mit einem Spannmittel 2 zum Spannen endloser Übertragungselemente (nicht gezeigt). Die in Fig. 1 dargestellte Spannvorrichtung 1 ist insbesondere zum Einbau in Verbrennungskraftmotoren geeignet, wo sie beispielsweise zum Spannen der Steuerketten eingesetzt wird. Dazu stützt sich das Spannmittel 2 mittelbar oder unmittelbar am Übertragungselement ab und weist einen Füllkörper 3 sowie einen Spannkolben 4 auf.

Ferner weist die Spannvorrichtung 1 ein Gehäuse 5 auf, in dem der Füllkörper 3 und der Spannkolben 4 aufgenommen sind.

Das Gehäuse 5 bildet zusammen mit dem Spannkolben 4 eine Druckkammer 6. Die Druckkammer 6 ist mit einem Spanndruck beaufschlagt, der den Spannkolben und die Spannhülse in Richtung des Pfeiles S weg vom Gehäuse 5 drückt. Außerdem ist in der Druckkammer 6 eine Feder 7 angeordnet, durch die das Spannmittel 2, 3, 4 ebenfalls in Pfeilrichtung P weg vom Gehäuse gedrückt ist.

Die Druckkammer 6 ist über eine Versorgungsleitung 8 mit einer Kammer 9 verbunden, in der ein Ventil 10 angeordnet ist. Das Ventil 10 ist beim Ausführungsbeispiel der Fig. 1 als ein Rückschlagventil ausgebildet, das durch den Spanndruck, der in der Druckkammer 6, der Versorgungsleitung 8 und der Kammer 9 wirkt, in eine Schließstellung überführt wird, in der die Druckverbindung zwischen der Druckkammer 6 und einem Versorgungsanschluss 11 unterbrochen ist. Der Versorgungsanschluss 11 ist mit einem Versorgungsdruck beaufschlagt, der bei offenem Ventil 10 der Druckkammer 6 zugeführt wird.

Das Ventil 10 weist einen Schließkörper 12 - im Ausführungsbeispiel der Fig. 1 als eine Kugel ausgestaltet - auf. Die Kugel ist in einem Führungskäfig 13 aufgenommen, der in einem Spannerteil 14 angebracht ist. Der Spannerteil 14 bildet eine einstückige Ventileinheit in Form eines Blocks, der mit vormontiertem Ventil 10 am Gehäuse 5 über nicht gezeigte Befestigungsmittel angebracht werden kann. Die Kammer 9 erstreckt sich zum Teil im Gehäuse 5 und zum Teil im Block 14. Alternativ kann die Kammer 9 auch lediglich im Gehäuse 5 oder lediglich im Block 14 ausgestaltet sein. Die Kammer 9 ist ferner so ausgestaltet, dass das vormontierte Ventil 10 mit dem Führungskäfig 13 eingesetzt werden kann.

Parallel zur Verbindungsleitung 8 ist im Gehäuse 5 ein Durchlass 15 ausgebildet, der ebenfalls eine Verbindung zwischen dem Versorgungsanschluss 11 bzw. der Kammer 9 und der Druckkammer 6 herstellt. Der Durchlass 15 ist koaxial zum Spannkolben 4, zum Füllkörper 3 und zum Versorgungsanschluss 11 angeordnet. Alternativ kann der Durchlass 15 jedoch auch andere Ausgestaltungen aufweisen.

Im Durchlass 15 ist ein im Gehäuse 5 längsbewegliches Betätigungselement 16 aufgenommen. Wie in Fig. 1 gezeigt ist, kann das Betätigungselement 16 als ein im Wesentlichen zylindrischer Kolben ausgestaltet sein, dessen eines Ende 17 eine Druckaufnahmefläche aufweist, die an die Druckkammer 6 angrenzt, und dessen anderes Ende an den Schließkörper 12 heranreicht. Das Betätigungselement 16 ist bevorzugt so ausgestaltet, dass der Durchlass 15 abgedichtet ist.

Zwischen dem Betätigungselement 16 und dem Gehäuse 5 kann eine Kammer 19 ausgebildet sein, die über eine Leitung 20 mit der Außenumgebung der Spannvorrichtung 1 verbunden ist.

Durch ein Vorspannelement 21 wird eine auf das Betätigungselement 16 einwirkende Vorspannkraft erzeugt, die das Betätigungselement 16 weg vom Schließkörper 12 in die Offenstellung drückt. Gemäß Fig. 1 kann das Vorspannelement 21 als eine Schraubendruckfeder ausgestaltet sein, die sich zwischen einem gehäuseseitigen Abschnitt und dem Betätigungselement abstützt.

Das Vorspannelement 21 kann, wie in Fig. 1 gezeigt, in der Kammer 9 angeordnet sein und koaxial das Betätigungselement 16 überlappen.

Das Vorspannelement 21 kann allerdings auch an anderen Stellen angeordnet sein, beispielsweise in der Kammer 19. Alternativ kann die Kammer 19 als Druckkammer ein hydraulisches Vorspannelement bilden, das das Betätigungselement 16 in Fig. 1 nach links drückt.

Schließlich weist die Spanneinrichtung 1 eine Leckageeinrichtung 22 auf, die der Entlüftung des Zylinders dient und die als eine Bohrung im Spannkolben 4 ausgestaltet sein kann, wie in Fig. 1 gezeigt ist. Die Bohrung 22 weist einen so kleinen Durchmesser auf, dass ihr Strömungswiderstand sehr groß ist und nur wenig Druckfluid aus der Druckkammer austreten kann. Durch die Leckageeinrichtung 22 ist die Druckkammer 6 mit der Außenumgebung der Spannvorrichtung 1 verbunden, so dass sich durch Leckage der Spanndruck aufgrund des hohen Strömungswiderstandes allmählich abbaut. Außerdem entsteht eine Leckage am Leckspalt zwischen Kolben und Zylinder. Der Leckspalt dient ebenfalls zur Entlüftung des Zylinders bzw. der Druckkammer 6.

Im Folgenden wird die Funktion der in Fig. 1 dargestellten Spannvorrichtung genauer erläutert.

Die im Betrieb der Spannvorrichtung 1 auf das Endlosübertragungselement einwirkende Spannkraft F setzt sich aus der Kraft der Druckfeder 7 und der Kraft aufgrund des in der Druckkammer 6 wirkenden Spanndruckes zusammen. Die durch den Spanndruck erzeugte Kraft resultiert aus dem Versorgungsdruck P und der Querschnittsfläche der Spanneinrichtung 2 in Richtung quer zur Spannkraft F.

Beim Ausführungsbeispiel der Fig. 1 wird die Zufuhr des Druckfluids, vorzugsweise von Drucköl, vom Versorgungsanschluss 11 zur Druckkammer 6 am Ventil 10 über das Betätigungselement 16 geregelt: Sobald der Spanndruck über die Druckaufnahmefläche 17 eine Kraft erzeugt, die größer als die entgegengerichtete Vorspannkraft des Vorspannelements 21 ist, bewegt sich das Betätigungselement 16 im Durchlass 15 in Richtung des Schließkörpers 12. Der Schließkörper 12 wird in Richtung des Ventilsitzes gedrückt und das Ventil 10 in die Schließstellung überführt, wie sie in Fig. 1 dargestellt ist. In der Schließstellung ist die Verbindung zwischen dem Versorgungsanschluss 11 und der Druckkammer 6 unterbrochen.

Durch die Einstellung der vom Vorspannelement 21 erzeugten Vorspannkraft wird der Spanndruck festgelegt, ab dem das Ventil 10 durch das Betätigungselement 16 in die Schließstellung überführt wird.

Durch Leckage von Druckfluid durch die Leckageeinrichtung 22 baut sich der Spanndruck in der Druckkammer 6 ab, so dass die in Schließrichtung auf die Druckaufnahmefläche 17 wirkende Kraft kleiner wird. Bei Unterschreiten eines vorbestimmten Spanndruckes öffnet sich das Ventil 10 unter Einwirkung des Vorspannelements 21. Das Ventil 10 wird von der Schließstellung in die Offenstellung überführt, bis der Spanndruck soweit angestiegen ist, dass sich das Ventil 10 wieder schließt.

Außerdem öffnet sich das Ventil 10 bei nachlassender Kettenspannung, wenn das Spannmittel 2 durch die Druckfeder 7 aus dem Gehäuse gedrückt wird, so dass sich das Volumen der Druckkammer 6 vergrößert und der Druck in der Druckkammer 6 sinkt.

Befindet sich das Betätigungselement 16 in seiner Ruhestellung, in die es durch das Vorspannelement 21 gedrückt wird, dann kann sich der Schließkörper 12 unabhängig vom Betätigungselement 16 in die Offen- und/oder Schließstellung bewegen. Die Bewegungen von Betätigungselement 16 und dem Schließkörper 12 sind lediglich dann miteinander gekoppelt, wenn der Schließkörper 12 durch das Betätigungselement 16 in die Schließstellung gedrückt wird. Ansonsten sind Schließkörper 12 und Betätigungselement 16 unabhängig voneinander beweglich in der Spannvorrichtung aufgenommen.

Folglich bildet das Ventil 10 zusammen mit dem Betätigungselement 16 und dem Vorspannelement 21 ein Spanndruck-Regelventil, das sich in Abhängigkeit von der Höhe des Spanndruckes öffnet oder schließt.

Bei der Bewegung des Betätigungselements 16 in die Schließstellung wird Luft aus der Kammer 19 durch die Versorgungsleitung 20 nach außen gedrückt. Aufgrund des engen Strömungsquerschnittes der Leitung 20 wird die Bewegung des Betätigungselements 16 durch die nur langsam aus der Kammer 19 entweichende Luft gedämpft.

Das Betätigungselement 16, das Vorspannelement 21 und der Schließkörper 12 bilden zusammen eine Schließeinrichtung, der - als Dämpfer - auch die Kammer 19 und die Leitung 20 zugerechnet werden kann.

Bei Wegfallen des Versorgungsdruckes P hält das Vorspannelement 21 das Ventil 10 in der Offenstellung, so dass die Druckkammer bei Start des Verbrennungskraftmotors sofort mit Öl befüllt wird.

## Patentansprüche

1. Spannvorrichtung (1) für endlose Übertragungselemente, wie Ketten oder Riemen, mit einer Druckkammer (6), die zur Betätigung eines auf das Übertragungselement einwirkenden Spannmittels (2, 3, 4) mit einem Spanndruck beaufschlagt ist, mit einem Versorgungsanschluss (11), der mit einem Versorgungsdruck (P) beaufschlagbar ist, und mit einem zwischen der Druckkammer (6) und dem Versorgungsanschluss (11) angeordneten Ventil (10) mit einer Schließeinrichtung (12, 13, 21, 16, 17, 10), die durch den Spanndruck in eine Schließstellung überführbar ist, wobei das Ventil (10) als Spanndruck-Regelventil ausgestaltet ist, **dadurch gekennzeichnet, dass** die Schließeinrichtung (12, 13, 21, 16, 17, 10) ein der Überführung in die Schließstellung entgegenwirkendes, im Wesentlichen federelastisches Vorspannelement (21) aufweist.

2. Spannvorrichtung (1) nach Anspruch 1, **dadurch gekennzeichnet, dass** die Schließeinrichtung (12, 13, 21, 16, 17, 10) einen Schließkörper (12) aufweist, durch den in der Schließstellung eine Verbindung zwischen dem Versorgungsanschluss (11) und der Druckkammer (6) druckdicht verschlossen ist.

3. Spannvorrichtung (1) nach Anspruch 2, **dadurch gekennzeichnet, dass** der Schließkörper (12) im Wesentlichen kugelförmig ausgestaltet ist.

4. Spannvorrichtung (1) nach Anspruch 2 oder 3, **dadurch gekennzeichnet, dass** die Schließeinrichtung (12, 13, 21, 16, 17, 10) ein Betätigungselement (16) aufweist, durch das bei Überschreiten eines vorbestimmten Spanndruckes der Schließkörper (12) in die Schließstellung gedrückt ist.

5. Spannvorrichtung (1) nach einem der Ansprüche 2 bis 4, **dadurch gekennzeichnet, dass** sich das Vorspannelement (21) zwischen einem gehäuseseitigen Abschnitt der Spannvorrichtung (1) und dem Betätigungselement (16) abstützt.

6. Spannvorrichtung (1) nach Anspruch 4 oder 5, **dadurch gekennzeichnet, dass** das Betätigungselement (16) und der Schließkörper (12) in der Spannvorrichtung (1) im Wesentlichen unabhängig voneinander beweglich aufgenommen sind.

7. Spannvorrichtung (1) nach einem der Ansprüche 4 bis 6, **dadurch gekennzeichnet, dass** das Betätigungselement (16) eine an die Druckkammer (6) angrenzende Druckaufnahmefläche (17) aufweist.

8. Spannvorrichtung (1) nach Anspruch 7, **dadurch gekennzeichnet, dass** ein der Druckaufnahmefläche (17) entgegengesetzte Ende (18) des Betätigungselements (16) an den Schließkörper (12) heranreicht.

9. Spannvorrichtung (1) nach einem der Ansprüche 4 bis 8, **dadurch gekennzeichnet, dass** das Betätigungselement (16) als ein im Wesentlichen in Spannrichtung (S) der Spannvorrichtung (1) längsbeweglicher Kolben ausgestaltet ist.

10. Spannvorrichtung (1) nach einem der obengenannten Ansprüche, **dadurch gekennzeichnet, dass** das Ventil (10) als Rückschlagventil ausgebildet ist.

11. Spannvorrichtung (1) nach einem der obengenannten Ansprüche, **dadurch gekennzeichnet, dass** das Vorspannelement (21) als eine Druckfeder ausgestaltet ist.

12. Spannvorrichtung (1) nach Anspruch 11, **dadurch gekennzeichnet, dass** die Druckfeder (21) und das Betätigungsmittel (16) zumindest abschnittsweise koaxial überlappend angeordnet sind.

13. Spannvorrichtung (1) nach einem der obengenannten Ansprüche, **dadurch gekennzeichnet, dass** eine Leckageeinrichtung (22) vorgesehen ist, durch die der Spanndruck in der Druckkammer abbaubar ist.

14. Spannvorrichtung (1) nach Anspruch 13, **dadurch gekennzeichnet, dass** die Leckageeinrichtung (22) eine Leckageleitung aufweist, die von der Druckkammer zur Außenumgebung der Spannvorrichtung führt.

## Claims

1. A tensioner (1) for endless transmission elements, such as chains or belts, comprising a pressure chamber (6) that is pressurised by a tensioning pressure to actuate tensioning means (2, 3, 4) acting upon the transmission element, comprising a supply connection (11) that is pressurised by a supply pressure (P), and a valve (10) interposed between the pressure chamber (6) and the supply connection (11) and comprising a closing unit (12, 13, 21, 16, 17, 10) that can be transferred to a closed position by the tensioning pressure, wherein the valve (10) is formed as a tensioning pressure control valve, **characterized in that** the closing unit (12, 13, 21, 16, 17, 10) comprises a substantially spring-elastic pretensioning element (21) that counteracts the transfer to the closed position.

2. A tensioner (1) as claimed in claim 1, **characterized in that** the closing unit (12, 13, 21, 16, 17, 10) comprises a closing body (12) through which in the closing position a connection between the supply connection (11) and the pressure chamber (6) is locked in a pressure-tight manner.

3. A tensioner (1) as claimed in claim 2, **characterized in that** the closing body (12) is formed substantially spherically.

4. A tensioner (1) as claimed in claim 2 or 3, **characterized in that** the closing unit (12, 13, 21, 16, 17, 10) comprises an operating element (16) through which the closing body (12) is pressed into the closing position when exceeding a predetermined tensioning pressure.

5. A tensioner (1) as claimed in one of claims 2 to 4, **characterized in that** the pretensioning element (21) is supported between a housing-sided section of the tensioner (1) and the operating element (16).

6. A tensioner (1) as claimed in claim 4 or 5, **characterized in that** the operating element (16) and the closing body (12) are accommodated in the tensioner (1) in a manner substantially movable independent of each other.

7. A tensioner (1) as claimed in one of claims 4 to 6, **characterized in that** the operating element (16) comprises a pressure receiving surface (17) adjoining the pressure chamber (6).

8. A tensioner (1) as claimed in claim 7, **characterized in that** an end (18) of the operating element (16) opposing the pressure receiving surface (17) reaches up to the closing body (12).

9. A tensioner (1) as claimed in one of claims 4 to 8, **characterized in that** the operating element (16) is formed as a piston longitudinally movable substantially in the tensioning direction (S) of the tensioner (1).

10. A tensioner (1) as claimed in one of the previous claims, **characterized in that** the valve (10) is formed as a return valve.

11. A tensioner (1) as claimed in one of the previous claims, **characterized in that** the pretensioning element (21) is formed as a pressure spring.

12. A tensioner (1) as claimed in claim 11, **characterized in that** the pressure spring (21) and the operating means (16) are at least sectionally arranged in a coaxially overlapping manner.

13. A tensioner (1) as claimed in one of the previous claims, **characterized in that** a leakage means (22) is provided through which the tensioning pressure in the pressure chamber can be reduced.

14. A tensioner (1) as claimed in claim 13, **characterized in that** the leakage means (22) has a leakage line which leads from the pressure chamber to the environment of the tensioner.

## Revendications

1. Dispositif de tension (1) pour des éléments de transmissions sans fin tels que des chaînes ou des courroies, avec une chambre de pression (6) qui est alimentée par une pression de tension pour la commande d'un moyen de tension (2, 3, 4) agissant sur l'élément de transmission, comprenant un raccord d'alimentation (11), qui peut être alimenté par une pression de tension (P), et une soupape (10) montée entre la chambre de pression (6) et le raccord d'alimentation (11) avec un dispositif de fermeture (12, 13, 21, 16, 17, 10) qui peut être transféré dans une position de fermeture par la pression de tension, dans lequel la soupape (10) est conçue comme une soupape de réglage de pression de tension, **caractérisé en ce que** le dispositif de fermeture (12, 13, 21, 16, 17, 10) comporte un élément de pré-tension sensiblement élastique (21) s'opposant au transfert dans la position de fermeture.

2. Dispositif de tension (1) selon la revendication 1, **caractérisé en ce que** le dispositif de fermeture (12, 13, 21, 16, 17, 10) comporte un corps de fermeture (12) au moyen duquel une liaison entre le raccord d'alimentation (11) et la chambre de pression (6) est obturée de manière étanche à la pression dans la position de fermeture.

3. Dispositif de tension (1) selon la revendication 2, **caractérisé en ce que** le corps de fermeture (12) a une forme sensiblement sphérique.

4. Dispositif de tension (1) selon la revendication 2 ou 3, **caractérisé en ce que** le dispositif de fermeture (12, 13, 21, 16, 17, 10) comporte un élément de commande (16) au moyen duquel le corps de fermeture (12) est comprimé dans la position de fermeture en cas de dépassement d'une pression de tension prédéterminée.

5. Dispositif de tension (1) selon l'une quelconque des revendications 2 à 4, **caractérisé en ce que** l'élément de pré-tension (21) s'appuie entre un tronçon du dispositif de tension (1) du côté du boîtier et l'élément de commande (16).

6. Dispositif de tension (1) selon la revendication 4 ou 5, **caractérisé en ce que** l'élément de commande (16) et le corps de fermeture (12) sont logés dans le dispositif de tension (1) de manière à se déplacer sensiblement indépendamment l'un de l'autre.

7. Dispositif de tension (1) selon l'une quelconque des revendications 4 à 6, **caractérisé en ce que** l'élément de commande (16) comporte une surface d'absorption de pression (17) contiguë à la chambre de pression (6).

8. Dispositif de tension (1) selon la revendication 7, **caractérisé en ce qu'**une extrémité (18) de l'élément de commande (16) opposée à la surface d'absorption de pression (17) s'étend jusqu'au corps de fermeture (12).

9. Dispositif de tension (1) selon l'une quelconque des revendications 4 à 8, **caractérisé en ce que** l'élément de commande (16) est conçu comme un piston déplaçable sensiblement longitudinalement dans le sens de tension (S) du dispositif de tension (1).

10. Dispositif de tension (1) selon l'une quelconque des revendications précédentes, **caractérisé en ce que** la soupape (10) est conçue comme une soupape anti-retour.

11. Dispositif de tension (1) selon l'une quelconque des revendications précédentes, **caractérisé en ce que** l'élément de pré-tension (21) est conçu comme un ressort de pression.

12. Dispositif de tension (1) selon la revendication 11, **caractérisé en ce que** le ressort de pression (21) et l'élément de commande (16) sont disposés de manière à se chevaucher coaxialement au moins par tronçons.

13. Dispositif de tension (1) selon l'une quelconque des revendications précédentes, **caractérisé en ce qu'**il est prévu un dispositif de fuite (22) au moyen duquel la pression de tension dans la chambre de pression peut être relâchée.

14. Dispositif de tension (1) selon la revendication 13, **caractérisé en ce que** le dispositif de fuite (22) comporte une conduite de fuite qui s'étend depuis la chambre de pression jusqu'à l'environnement extérieur du dispositif de tension.
